# EUROPÄISCHE PATENTSCHRIFT

(11) **EP 1 274 303 B1**
(45) Veröffentlichungstag und Bekanntmachung des Hinweises auf die Patenterteilung: **28.07.2004**
(21) Anmeldenummer: 01933817.7
(22) Anmeldetag: 11.04.2001
(51) Int. Cl.: A01N 31/02, A01N 25/30, C11D 17/00

(54) **MIKROBIZID WIRKSAME TENSIDE**
MICROBICIDALLY ACTIVE TENSIDES
TENSIOACTIFS A ACTION MICROBICIDE

(30) Priorität: 20.04.2000 DE 10020145
(43) Veröffentlichungstag der Anmeldung: 15.01.2003
(73) Patentinhaber: Ecolab Inc., St. Paul, MN 55102-1390 (US)
(72) Erfinder: MERZ, Thomas, 40723 Hilden (DE); MEYER, Bernhard, 40822 Mettmann (DE); SHAMAYELI, Khalil, 40225 Düsseldorf (DE)
(74) Vertreter: Sternagel, Fleischer, Godemeyer & Partner Patentanwälte
(86) Internationale Anmeldenummer: PCT/EP2001/004152
(87) Internationale Veröffentlichungsnummer: WO 2001/080907

(56) Entgegenhaltungen:
- EP-A- 0 592 876
- EP-A- 0 709 089
- WO-A-98/10049
- GB-A- 2 338 242
- US-A- 5 798 329

## Beschreibung

Die vorliegende Erfindung betrifft die Verwendung eines tensidischen Mittels, als desinfizierende Komponente in Reinigungs- und/oder Desinfektionsvorgängen und/oder -zubereitungen.

In der europäischen Patentanmeldung EP-A-0 342 499 wird ein Verfahren zur Reinigung und Desinfektion beschrieben, worin die zu desinfizierenden Oberflächen mit einer Reinigungs-Desinfektionsmittellösung in Kontakt gebracht werden, die mindestens ein schaumarmes nichtionisches Tensid, mindestens ein proteolytisches Enzym, mindestens einen Komplexbildner und mindestens einen Aldehyd aus der Gruppe bestehend aus Formaldehyd und aliphatischen Dialdehyden mit 2 bis 8 Kohlenstoff-Atomen enthält und einen pH-Wert zwischen 6 und 8 aufweist, wobei die Lösung auf 55 bis 65° C erhitzt und 1 bis 15 Minuten lang bei dieser Temperatur gehalten wird und anschließend abgetrennt wird. Anschließend werden die zu behandelnden Oberflächen zweimal mit Wasser gespült, wobei man zumindest im letzten Spülgang das Wasser auf 55 bis 65° C erhitzt und dann mit sterilisierter Heißluft bei 40 bis 60° C getrocknet.

Aus der europäischen Patentanmeldung EP-A-0 156 275 ist es bekannt, Aminverbindungen, die durch Umsetzung von Verbindungen mit der Formel R¹NHCH₂CH₂CH₂NH₂, worin R¹ für einen linearen Alkylrest mit 12 bis 14 Kohlenstoff-Atomen steht, mit Verbindungen der Formel R²OCOCH₂CH₂CHNH₂COOH, in der R² einen Alkylrest mit 1 bis 4 Kohlenstoff-Atomen oder ein Wasserstoff-Atom bedeutet, im Molverhältnis 1 : 1 bis 1 : 2 bei 60 bis 175° C erhalten werden, als antimikrobiell wirksame Substanzen einzusetzen. Diese Umsetzungsprodukte sind auch als Glucoprotamin bekannt geworden.

In der deutschen Patentanmeldung DE-A-40 07 758 wird ein wäßriges tensidhaltiges Reinigungs- und Desinfektionsmittelkonzentrat beschrieben, das als antimikrobielle Wirkstoffe die in der europäischen Patentanmeldung EP- A 0 156 275 genannten Aminverbindungen in Kombination mit ausgewählten quartären Ammoniumverbindungen enthält. Ferner wird ein Verfahren zur Sprühreinigung und - desinfektion von Gegenständen in automatisch betriebenen Anlagen beschrieben, das die Schritte a) Aufsprühen einer wäßrigen, desinfizierenden Reinigungsmittellösung bei erhöhter Temperatur, die durch Verdünnen des beschriebenen Reinigungsmittelkonzentrats hergestellt worden ist, und gewünschtenfalls b) Aufsprühen einer wäßrigen, ggf. tensidhaltigen Klarspüllösung sowie gewünschtenfalls c) Trocknen, vorzugsweise mittels Heißluft, umfaßt.

In der EP-A-343 605 wird ein flüssiges aldehydfreies Desinfektionsmittel beschrieben, das als wirksame Komponente N,N-Bis-(3-aminopropyl)-laurylamin als wirksame Komponente enthält.

In der europaischen Patentanmeldung EP-A-0 620 013 wird ein Desinfektionsmittel für Sammeltoiletten-Systeme und ähnliche Einrichtungen beschrieben, das manuell eingesetzt wird. Es enthält Salze von Aminen mit der Formel RN[(CH₂)ₙ-NH₂] [(CH₂)ₘ-NH₂] oder RNH[(CH₂)ₚ-NH₂], in denen R für einen geradkettigen oder verzweigten Alkyl- oder Alkenylrest mit 6 bis 22 C-Atomen, n und m einen Wert von 4 bis 12 und p einen Wert von 2 bis 12 bedeuten. Wegen der korrosiven Eigenschaften gegenüber Metallen, wie Stahl, und Kunststoffen werden die Mittel bei niedrigen Temperaturen bis 50°C angewendet.

In der europäischen Patentanmeldung EP-A-0 551 975 werden ein Desinfektionsmittelkonzentrat und ein Desinfektionsmittel auf Amin- und Alkoholbasis und deren Verwendung offenbart, wobei die Alkoholkomponente mindestens einen aromatischen Alkohol und die Aminkomponente mindestens ein sekundäres und/oder tertiäres hydroxygruppenfreies Alkylamin umfaßt. Die gebrauchsfertige Losung weist einen pH-Wert zwischen 7 und 12 auf. Das Desinfektionsmittel wird insbesondere als Bakterizid, insbesondere als Mykobakterizid, Fungizid oder Viruzid, verwendet. Die europäische Patentanmeldung EP-A-0-612 170 betrifft ebenfalls ein amin- und alkoholhaltiges Desinfektionsmittel, worin die Alkoholkomponente mindestens einen begrenzt wassermischbaren Glykolether und die Aminkomponente mindestens ein sekundäres und/oder tertiäres, hydroxygruppenfreies Alkylamin umfaßt.

In der DE 31 11 158 werden desinfizierende Reinigungsverstärker offenbart, die ein nichtionisches Tensid, eine desifizierende quarternäre Ammoniumverbindung, Wasser und ein Diammoniumsalz bestimmter Dicarbonsäuren enthalten.

Die GB 2338242 beschreibt wäßrige, germizide Tensidmischungen, die anionische Tenside, ein kationisches germizides Tensid, ein nichtionisches Tensid und einen Aufheller enthalten.

Die in den voranstehenden Druckschriften beschriebenen Desinfektions- und Reinigungsmittel und -verfahren haben einen gemeinsamen Nachteil: um die gewunschte desinfizierende Leistung zu erreichen, ist die Zugabe von speziell dafür bereitgestellten Desinfektionswirkstoffen notwendig.
Als Beispiele seien Aldehyde, quartemäre Ammoniumverbindungen, oxidierende Komponenten auf Basis peroxid- oder halogenhaltiger Verbindungen, organische Halogenverbindungen, Phenol-Derivate genannt.
Es ist bekannt, daß der Einsatz von Desinfektionswirkstoffen in der Praxis zu Problemen führen kann. Beispielsweise können Desinfektionswirkstoffe zu allergischen Reaktionen bei Personen, die in irgendeiner Form mit den Desinfektionswirkstoffen in Berührung kommen, führen. Außerdem können bei Verwendung von Verbindungen, wie Aldehyden oder Aminen durch Reaktion mit Reinigungsrückständen auf den zu desinfizierenden Oberflächen Beläge gebildet werden.
In vielen Fällen ist auch das ökologische Profil der Desinfektionswirkstoffe negativ zu bewerten. Dies kann für die Toxizität gegenüber Wasserorganismen aber auch für die Abbaubarkeit der Desinfektionswirkstoffe gelten.
In den meisten Fällen und insbesondere in Reinigungs- und Desinfektionsvorgängen, bei denen tensidische reinigungsaktive Komponenten zum Einsatz kommen, tragen zusätzlich Desinfektionswirkstoffe nur wenig oder nichts zum Reinigungsergebnis bei und verursachen nur zusätzliche Rohstoffkosten.
Die Verwendung oxidativer Desinfektionsmittel kann unangenehme Folgen, wie ätzende Reaktion auf der Haut oder brandfördernde Eigenschaften mit sich bringen. Darüber hinaus sind Lager-, Handhabungs- und Transportprobleme bei Verwendung von oxidativen Desinfektionsmitteln bekannt. Beim Einsatz von oxidativen Desinfektionsmitteln zusammen mit farbigen Textilien kann es zum Ausbleichen der Farbstoffe kommen. Außerdem ist bekannt, daß bei Verwendung von Persäuren, Wasserstoffperoxid und anderen Peroxiden Textilien, bzw. Textilfasern nachhaltig geschädigt werden können.

Demzufolge bestand die Aufgabe der vorliegenden Erfindung darin, nach tensidisehen Komponenten zu suchen, durch deren Verwendung auf den Einsatz zusätzlicher Desinfektionswirkstoffe verzichtet und trotzdem ausreichende desinfizierende Leistung erbracht werden kann.

Die EP-A-0 709 089 beschreibt dermatologische Zubereitungen gegen Superinfektionen der Haut mit einem Gehalt an ethoxylierten und/oder propoxylierten Alkoholen und/oder Carbonsäuren. Zu den bevorzugten ethoxylierten bzw. propoxylierten Verbindungen zählen unter anderen Alkohole mit C₁₂₋₂₀-Alkylresten und 5 bis 30 Ethylenoxid- bzw. Propylenoxidresten, wobei C₁₈-Alkylreste besonders bevorzugt sind. Insbesondere sind ethoxylierte organische Verbindungen bevorzugt, die gemäß CTFA-Nomenklatur Ceteth-X, Ceteareth-X, Stearteth-X genannt werden, wobei x eine Zahl von 1 bis 50, bevorzugt 5 bis 30, darstellt.

Demgegenüber betrifft die vorliegende Erfindung die Verwendung eines tensidischen Mittels, das bezogen auf das gesamte Mittel
a) 5 bis 100 Gew.-% von einem oder mehreren nichtionischen Tensiden der allgemeinen Formel (I),

   R¹-(OC₂H₄)n-(OC₃H₆)ₘ-OH (I)

   in der R¹ ein geradkettiger oder verzweigter Alkyl oder Alkenylrest mit 12 C-Atomen ist und die Summe aus mittlerem Ethoylierungsgrad n und mittlerem Propoxylierungsgrad m zwischen 0,5 und 5 liegt, und/oder
b) 5 bis 100 Gew.-% von einem oder mehreren nichtionischen Tensiden der allgemeinen Formel (II),

   R²-(OC₂H₄)ᵣ(OC₃H₆)ₛ-OH (II)

   in der R² ein geradkettiger oder verzweigter Alkyl- oder Alkenylrest mit 11 oder 13 C-Atomen ist und die Summe aus mittlerem Ethoxylierungsgrad r und mittlerem Popoxylierungsgrad s zwischen 0,5 und 5 liegt, und
c) gegebenenfalls Wasser und/oder weitere Hilfs- und/oder Wirkstoffe enthält, wobei die Summe aller Bestandteile 100 Gew.-% nicht überschreitet, zur Desinfektion in den Bereichen Haushalt, lebensmittelherstellende und -verarbeitende Industrie, Kosmetik- und Pharmaindustrie, Krankenhäusern, Wäschereien, Großküchen, Gebäudereinigung und Landwirtschaft.

Die erfindungsgemäß zu verwendenden Mittel enthalten bevorzugt 5 bis 60 Gew.%, insbesondere 5 bis 40 Gew.-%, nichtionisches Tensid der allgemeinen Formel (I) und/oder 5 bis 60 Gew.%, insbesondere 5 bis 40 Gew.-%, nichtionisches Tensid der allgemeinen Formel (II). Ferner ist bevorzugt, daß für das nichtionische Tensid gemäß Formel (I) die Summe aus mittlerem Enthoxylierungsgrad n und mittlerem Propolxytierungsgrad m zwischen 1 und 3 liegt, wobei m auch 0 sein kann, und für das nichtionische Tensid gemäß Formel (II) die Summe aus mittlerem Ethoxylierungsgrad r und mittlerem Propoxylierungsgrad s zwischen 1 und 3 liegt, wobei s auch 0 sein kann. Das Gewichtsverhältnis von a) zu b) im Gemisch liegt vorzugsweise zwischen 4:1 und 1:4.

Im Stand der Technik war nirgends offenbart, daß gerade durch die erfindungsgemäße Verwendung der beschriebenen Tenside hervorragende desinfizierende Ergebnisse erreicht werden können.
Vorzugsweise wird die erfindungsgemäße Verwendung durch separate Zugabe der erfindungsgemäß zu verwendenden Mittel in den Reinigungs- und oder Desinfektionsvorgang, sozusagen als Desinfektions-Booster, oder durch Zugabe erfindungsgemäß zu verwendenden Mittel in die Zubereitung des Reinigungs- und oder Desinfektionsmittels durchgeführt.
Weiterhin ist bevorzugt, daß das Desinfektionsergebnis ohne Zugabe weiterer Desinfektionskomponenten erreicht wird.

Das erfindungsgemäß zu verwendende tensidische Mittel enthält, bezogen auf das gesamte Mittel, vorzugsweise zusätzlich bis zu 40 Gew.-%, besonders bevorzugt 0,5 Gew.-% bis 35 Gew.-%, ganz besonders bevorzugt 0,5 Gew.-% bis 8 Gew.-%, bei Raumtemperatur festes Aniontensid, insbesondere Alkylbenzolsulfonsäure, Alkali-Alkylbenzolsulfonat und/oder Alkali-Alkyl- oder Alkenylsulfat.

Zu den geeigneten synthetischen Aniontensiden, die in fester, feinteiliger, weitgehend wasserfreier Form in das erfindungsgemäße Tensidgemisch eingearbeitet werden können, gehören insbesondere solche vom Sulfonat- oder Sulfat-Typ, die normalerweise als Alkalisalze, bevorzugt als Natriumsalze vorliegen. Insbesondere die genannten Tenside vom Sulfonat-Typ können jedoch auch in Form ihrer freien Säuren eingesetzt werden. Geeignete anionische Tenside vom Sulfonat-Typ sind Alkylbenzolsulfonate mit linearen C₉₋₁₃-Alkylketten, insbesondere Dodecylbenzolsulfonat, lineare Alkansulfonate mit 11 bis 15 C-Atomen, wie sie durch Sulfochlorierung beziehungsweise Sulfoxidation von Alkanen und anschließende Verseifung beziehungsweise Neutralisation erhältlich sind, Salze von Sulfofettsäuren sowie deren Ester, die sich von insbesondere in alpha-Stellung sulfonierten gesättigten C₁₂₋₁₈-Fettsäuren und niederen Alkoholen, wie Methanol, Ethanol und Propanol ableiten, und Olefinsulfonate, wie sie zum Beispiel durch SO₃-Sulfonierung entständiger C₁₂₋₁₈-Olefine und anschließende alkalische Hydrolyse gebildet werden. Geeignete Tenside vom Sulfat-Typ sind insbesondere die primären Alkylsulfate mit vorzugsweise linearen Alkylresten mit 10 bis 20 C-Atomen, die ein Alkali-, Ammonium- oder Alkyl- beziehungsweise Hydroxyalkylsubstituiertes Ammoniumion als Gegenkation besitzen. Besonders geeignet sind die Derivate der linearen Alkohole mit insbesondere 12 bis 18 C-Atomen und deren verzweigtkettiger Analoga, der sogenannten Oxoalkohole. Brauchbar sind demgemäß insbesondere die Sulfatierungsprodukte primärer Fettalkohole mit linearen Dodecyl-, Tetradecyl-, Hexadecyl- oder Octadecylresten sowie deren Gemische. Besonders bevorzugte Alkylsulfate enthalten einen Talgalkylrest, das heißt Mischungen mit im wesentlichen Hexadecyl- und Octadecylresten. Die Alkylsulfate können in bekannter Weise durch Reaktion der entsprechenden Alkoholkomponente mit einem üblichen Sulfatierungsreagenz, insbesondere Schwefeltrioxid oder Chlorsulfonsäure, und anschließende Neutralisation mit Alkali-, Ammonium- oder Alkyl- beziehungsweise Hydroxyalkyl-substituierten Ammoniumbasen hergestellt werden. Außerdem können die sulfatierten Alkoxylierungsprodukte der genannten Alkohole, sogenannte Ethersulfate, in den Mitteln enthalten sein. Vorzugsweise enthalten derartige Ethersulfate 2 bis 30, insbesondere 4 bis 10, Ethylenglykol-Gruppen pro Molekül.

Bevorzugte synthetische Aniontenside sind Alkylbenzolsulfonate und/oder Alkylsulfate.

In einer bevorzugten Ausführungsform enthält das erfindungsgemäß zu verwendende tensidische Mittel zusätzliche Komponenten mit komplexbildenden Eigenschaften und/oder Solubilisierungsmittel und/oder oberflächenaktive Komponenten.

Die Komponenten mit komplexbildenden Eigenschaften werden vorzugsweise ausgewählt aus Nitrilotriessigsäure, Ethylendiamintetraessigsäure, Methylglycindiessigsäure, Gluconsäure, Zitronensäure, Dicarboxymethyl-L-glutaminsäure, Serindiessigsäure, Imidosuccinsäure, und der Gruppe der Polycarbonsäuren und Phosphonsäuren sowie jeweils deren Salzen.
Als Polycarbonsäuren kommen beispielsweise Polyacrylsäuren und Copolymere aus Maleinsäureanhydrid und Acrylsäure sowie die Natriumsalze dieser Polymersäuren in Betracht. Handelsübliche Produkte sind z. B. Sokalan® CP 5 und PA 30 von BASF, Alcosperse® 175 und 177 von Alco, LMW® 45 N und SPO2 ND von Norsohaas. Zu den geeigneten nativen Polymeren gehören beispielsweise oxidierte Stärke (z. B. DE 42 28 786) und Polyaminosäuren wie Polyglutaminsäure oder Polyasparaginsäure, z. B. der Firmen Cygnus, Bayer, Rohm & Haas, Rhöne-Poulenc oder SRCHEM.

Als Phosphonsäuren kommen beispielsweise 1-Hydroxyethan-1,1-diphosphonsaure, Diethylentriaminpentamethylenphosphonsäure oder Ethylendiamintetramethylenphosphonsäure sowie jeweils deren Alkalisalze in Frage.

Besonders bevorzugt werden die Komponenten mit kompexbildenden Eigenschaften ausgewählt aus Nitrilotriessigsäure, Polyasparaginsäure oder Polycarbonsäuren, die vorzugsweise auf Polymerisation von Asparaginsäure mit anderen Carbonsäuren zurückgehen, sowie Gluconsäure.

Zusätzlich Solubilisierungsmittel sind vorzugsweise ausgewählt aus der Gruppe der anionischen Tenside, ganz besonders bevorzugt aus den Sulfonaten/Sulfonsäuren und insbesondere aus Cumol-, Xylol-, Octyl-, Naphthyl- und Alkylbenzolsulfonaten/Sulfonsäuren, wobei im letzten Fall die Alkylgruppe zwischen 6 und 16 Kohlenstoffatomen beinhaltet, oder Mischungen dieser Verbindungen und/oder weiteren Verbindungen, die als Lösevermittler wirken.

Weitere bevorzugte oberflächenaktive Komponenten sind Aminoxidderivate, wobei besonders bevorzugt ist, daß das Aminoxidderivat ein Trialkylaminoxid mit einer 8 bis 20 Kohlenstoffatome enthaltenden Alkylgruppe und zwei Alkylgruppen mit einer geringeren Anzahl an Kohlenstoffatomen in der Alkylkette darstellt, wobei die beiden kürzeren Alkylgruppen gleich oder verschieden sein können, wobei es ganz besonders bevorzugt ist, daß das Aminoxidderivat Talgfett-bis-(2-hydroxyethyl-)-aminoxid, Oleyl-bis-(2-hydroxyethyl-)-aminoxid, Kokos-bis-(2-hydroxyethyl-)-aminoxid, Tetradecyldimethyl-aminoxid und/oder Alkyldimethyl-aminoxid, das 12 bis 18 Kohlenstoffatome in der Alkylkette aufweist, ist.
Zusätzliche bevorzugte oberflächenaktive Komponenten sind ausgewählt aus den Gruppen der anionischen, kationischen, nichtionischen, amphoteren Tenside, Eiweißhydrolysate, der Silikonverbindungen und der Phosphorsäureester und deren Salzen.
Als zusätzliche nichtionische Tenside können in den erfindungsgemäß zu verwendenden tensidischen Mitteln Alkylpolyglukoside, die üblicherweise durch Kondensation von Fettalkoholen mit Glukose oder Polyglukose großtechnisch zugänglich und in verschiedenen Varianten im Handel erhältlich sind, eingesetzt werden. Beispiele von Alkylpolyglukosiden, die sich für den erfindungsgemäßen Einsatz besonders gut eignen, sind die Produkte Glukopon® 600 der Firma Henkel und Triton® BG10 der Firma Röhm & Haas.
Als nichtionische Tenside können in den erfindungsgemäß zu verwendenden tensidischen Mitteln zusätzlich zu den in Formel I und II definierten Verbindungen weitere alkoxylierte Alkylalkohole mit 8 bis 22 Kohlenstoffatomen in der Alkylkette enthalten sein, wobei besonders bevorzugt wenigstens eine Verbindung aus den Gruppen der gemischten Ethoxylate/Propoxylate von verzweigten oder unverzweigten Alkylalkoholen mit 8 bis 22 Kohlenstoffatomen in der Alkylkette und der endgruppenverschlossenen Ethoxylate von verzweigten oder unverzweigten Alkylalkoholen mit 8 bis 22 Kohlenstoffatomen in der Alkylkette enthalten ist, und ganz besonders bevorzugt wenigstens eine Verbindung aus den Gruppen ethoxylierter und propoxylierter Alkylalkohole mit 12 bis 22 Kohlenstoffatomen im Alkylteil, der Butylether ethoxylierter Alkylalkohole mit 12 bis 22 Kohlenstoffatomen im Alkyteil und Methylether ethoxylierter Alkylalkohole mit 12 bis 22 Kohlenstoffatomen im Alkylteil enthalten ist, wobei im speziellen Fall Butylether und Methylether des ethoxylierten 2-Octyl-1-dodecanols enthalten sind.
Nichtionische Tenside, die zur Herstellung von Formulierungen für die erfindungsgemäße Verwendung besonders gut geeignet sind, sind beispielsweise Plurafac® LF 403, Plurafac® 431 der Firma BASF sowie Dehypon® LT 104 und Dehypon® G 2084 der Firma Henkel.

Vorzugsweise werden als Phosphorsäureester in den erfindungsgemäß zu verwendenden tensidischen Mitteln Phosphorsäureesterverbindungen eingesetzt, worunter sich vorzugsweise zumindest ein Salz eines Phosphorsäurepartialesters befindet, wobei besonders bevorzugt wenigstens ein Alkalisalz eines Phosphorsaurepartialesters von alkoxyliertem Alkylphenol vorliegt.

Bei den Phosphorsäureestern handelt es sich um tensidische Substanzen, die sich vorzugsweise von langkettigen aliphatischen oder araliphatischen Alkoholen ableiten. Als besonders geeignet haben sich die Salze der Phosphorsäurepartialester und hier insbesondere die von alkoxylierten Alkylphenolen erwiesen. Vorzugsweise werden als Alkalisalze die Natrium- und Kaliumsalze verwendet, von denen wiederum die Kaliumsalze besonders bevorzugt werden. Tensidisch wirksame Phosphorsäurepartialester, wie sie bevorzugt erfindungsgemäß verwendet werden, sind im Handel erhältlich. Ein Beispiel eines erfindungsgemäß besonders gut brauchbaren Wirkstoffs dieser Art ist das Produkt Triton® H 66 (Röhm & Haas).

Obwohl der Einsatz der erfindungsgemäß zu verwendenden tensidischen Mittel in den meisten Fällen zu ausreichenden Desinfektionsergebnisse führt, kann es von Fall zu Fall geraten sein, zusätzliche antimikrobielle Komponenten hinzuzufügen.

In diesem Fall werden die zusätzlichen antimikrobiellen Komponenten vorzugsweise ausgewählt aus Alkoholen, Aldehyden, antimikrobiellen Säuren, Carbonsäureestern, Säureamiden, Phenolen, Phenolderivaten, Diphenylen, Diphenylalkanen, Harnstoffderivaten, Sauerstoff-, Stickstoff-Acetalen sowie -Formalen, Benzamidinen, Isothiazolinen, Phthalimidderivaten, Pyridinderivaten, antimikrobiellen oberflächenaktiven Verbindungen, Guanidinen, antimikrobiellen amphoteren Verbindungen, Chinolinen, 1,2-Dibrom-2,4-dicyanobutan, lodo-2-propynyl-butyl-carbamat, lod, lodophoren, Peroxiden, wobei besonders bevorzugt die zusätzlichen antimikrobiellen Komponenten ausgewählt sind aus Ethanol, n-Propanol, i-Propanol, 1,3-Butandiol, Phenoxyethanol, 1,2-Propylenglykol, Glycerin, Undecylensäure, Zitronensäure, 2-Benzyl-4-chlorphenol, 2,2'-Methylen-bis-(6-brom-4-chlorphenol), 2,4,4'-Trichlor-2'-hydroxydiphenylether, N-(4-Chlorphenyl)-N-(3,4-dichlorphenyl)-harnstoff, N,N'-(1,10-decandiyldi-1-pyridinyl-4-y(iden)-bis-(1-octanamin)-dihydrochlorid, N,N'-Bis-(4-Chlorphenyl)-3,12-diimino-2,4,11,13-tetraaza-tetradecandiimidamid, quaternären Arnmoniumverbindungen, Guanidinen, Amphoteren, sowie Gluconsäure, Zitronensäure, Milchsäure, Äpfelsäure, Weinsäure, Salicylsäure, p-Hydroxybenzoesäure.

Bevorzugte Applikationsformen der erfindungsgemäß zu verwendenden tensidischen Mittel sind wäßrige Lösung, Gel, Emulsion, Paste, Dispersion, fester Formkörper, Pulver.

Dabei ist es ebenfalls bevorzugt, die erfindungsgemäß zu verwendenden tensidischen Mittel in konzentrierter oder verdünnter Form im Tauchverfahren oder durch Befüllen des zu desinfizierenden Gegenstandes und/oder über Auftrage-Hilfsmittel mit den zu reinigenden und/oder desinfizierenden Oberflächen in Kontakt zu bringen. Bevorzugte Auftrage-Hilfsmittel sind Schwamm, Tücher, Lappen, Bürsten, Wischer, Gummi, Sprühvorrichtung, Schaumvorrichtung.

Vorzugsweise wird durch Verwendung der erfindungsgemäß zu verwendenden tensidischen Mittel gleichzeitig gereinigt und desinfiziert.

In einer bevorzugten Verwendung werden Textilien bei niedrigen Temperaturen zwischen 10 und 70 °C, mit einem erfindungsgemäß zu verwendenden tensidischen Mittel in konzentrierter oder verdünnter Form in Kontakt gebracht und dabei desinfizierend gewaschen. Es wurde festgestellt, daß es unter diesen Bedingungen möglich ist, auch ohne Zusatz von oxidierende Desinfektionsmittel, wie beispielsweise Peressigsäure, ein ausreichendes Desinfektionsergebnis zu erreichen.

Dies ist ebenfalls von erheblicher Bedeutung, da bei Verwendung von Persäuren, wie z.B. Peressigsäure, Textilien bzw. Textilfasern im Waschverfahren nachhaltig geschädigt werden. Dies trifft um so mehr zu, wenn es um das Waschen empfindlicher Textilien, bestehend aus Materialien wie Wolle, Seide, Polyacryl, Viskose, Polyamid, Acetat, Lyocell, geht.
Das Ausmaß der Schädigung wird darüber hinaus durch die Bedingungen des Waschprozeßes wie Mechanik, Temperatur, Zeit, Konzentration und Art der Chemie beeinflußt.
In Abhängigkeit von den Bedingungen kommt es zu mehr oder weniger starken Schädigung von Textilien. Bei Wolltextilien führt erhöhte Mechanik zur irreversiblen Verhakung der Textilfasern miteinander, was dazu führt, daß Wolle erheblich schrumpft. Von den Bedingungen des Waschprozeßes hängt auch ab, ob und wie stark die Polymerstruktur der Textilfasern verändert wird. Eine Veränderung der Polymerstruktur führt zu einer Verringerung der Reißfestigkeit von Textilien. Bei Wolle resultiert hieraus eine erhöhte Alkalilöslichkeit, bei Baumwolle ein erhöhter Reißkraftverlust, bzw. ein erhöhter Schädigungsfaktor.

Um dieses Problem zu lösen, ist es erforderlich, den desinfizierenden Waschprozeß unter besonders schonenden Bedingungen durchzuführen.

Der Zusatz von ausreichend wirksamen Mengen Persäureverbindungen führt jedoch auch in Kombination mit üblichen Feinwaschmitteln bereits bei niedrigen Waschtemperaturen, wie 30 °C bis 40 °C im desinfizierenden Waschprozeß zu den oben beschriebenen Nachteilen.
Aus diesem Grund hat man sich im Stand der Technik mit anderen Wirkstoffen zum desinfizierenden Waschen von Textilien beschäftigt.
Es wurde festgestellt, daß Desinfektionsmittel auf Basis quarternärer Ammoniumverbindungen bei niedrigen Temperaturen in der Regel keine ausreichende Desinfektionswirkung im desinfizierenden Waschprozeß haben.

Bei Untersuchungen mit Desinfektionsmitteln auf Basis von Aldehyden beobachtet man starke Textilschädigung.

Durch Verwendung der erfindungsgemäß zu verwendenden tensidischen Mittel ist es möglich, den desinfizierenden Waschvorgang besonders schonend durchzuführen, da bei Verzicht auf die üblicherweise eingesetzten oxidierenden Desinfektionsmittel, wie beispielsweise Peressigsäure, die Textilien weniger geschädigt werden.

Es ist weiterhin bevorzugt, mit den erfindungsgemäß zu verwendenden tensidischen Mitteln Geschirr, Textilien, Fliesen, Wände, Bodenbeläge, Holz- und Steinflächen und -böden und -wände, Arbeitsflächen, Maschinenaußenflächen, Kleinteile von Maschinen, medizinische Instrumente und/oder Geräte, beschichtete und/oder unbeschichtete Tanks und/oder sonstige Behälter, Leitungen, Transportbänder, Gebinde zu reinigen und/oder zu desinfizieren.

Eine bevorzugte Spezialanwendung der erfindungsgemäß zu verwendenden tensidischen Mittel findet im Verfahrensablauf der aseptischen oder keimarmen Abfüllung von mikrobiologisch sensiblen Lebensmitteln, insbesondere von Eistee, Apfelschorle, alkoholhaltigem und/oder alkoholfreiem Bier, Milch, Joghurt, statt, wobei es hier besondes bevorzugt ist, daß die Lebensmittelverpackungen vor der Abfüllung der mikrobiologisch sensiblen Produkte mit erfindungsgemäß zu verwendenden Formulierungen behandelt werden und/oder die im Bereich der keimarmen Abfüllung befindlichen Oberflächen, inklusive der lebensmittelführenden Leitungen, Tanks, Geräte, Maschinen, Transportbänder und -anlagen, Rinser, Herstellvorrichtungen für Gebinde mit erfindungsgemäß zu verwendenden Formulierungen behandelt werden.

Dementsprechend werden die erfindungsgemäß zu verwendenden tensidischen Mittel in Haushaltsbereichen, in der lebensmittelherstellenden und -verarbeitenden Industrie, wie z.B. in der Getränke-, Milch-, Fischindustrie und in Schlachtereien sowie in Gastronomie und Betriebsgastronomie, Getränkeherstellung, Milchgewinnung und -verarbeitung, Kosmetik- und Pharmaindustrie, Krankenhäusern, Wäschereien, Großküchen, in der Gebäudereinigung, beispielsweise durch professionelle Dienstleister, und in der Landwirtschaft verwendet.

Es ist bevorzugt, bei der Herstellung der erfindungsgemäß zu verwendenden tensidischen Mittel mindestens eines der nichtionischen Tenside der Formel (I) oder (II) auf Temperaturen im Bereich von 60 bis 120 C zu erwärmen, bei diesen Temperaturen die zusätzlichen Bestandteile im nichtionischen Tensid zu lösen oder zu dispergieren und das entstehende Gemisch, gegebenenfalls nach Zugabe des zweiten nichtionischen Tensids, auf Temperaturen von 40°C bis Raumtemperatur abzukühlen.
Für den Fall, daß in diesem bevorzugten Herstellverfahren bei Raumtemperatur feste Bestandteile zugesetzt werden sollen, ist es bevorzugt, diese bei Temperaturen im Bereich von 70 bis 90 °C mit dem nichtionischen Tensid der Formel (I) oder (II) zu mischen.
Für den Fall, daß in diesem bevorzugten Herstellverfahren sowohl nichtionisches Tensid gemäß Formel (I) als auch nichtionisches Tensid gemäß Formel (II) zum Einsatz kommen, ist es bevorzugt, dasjenige nichtionische Tensid gemäß Formel (I) oder (II) vorzulegen, das in geringerer Menge eingesetzt werden soll, zu erwärmen, gegebenenfalls den Schaumregulatur zuzumischen, anschließend eine Polycarbonsäure, beziehungsweise deren Alkalisalz, wie sie bei der Beschreibung der Sequestriermittel näher dargelegt ist, und danach gegebenenfalls ein synthetisches Aniontensid und zuletzt das nicht vorgelegte nichtionische Tensid gemäß Formel (I) oder (II) zuzumischen.

Ein weiterer Gegenstand der vorliegenden Erfindung ist die Verwendung pastenförmiger, im wesentlichen wasserfreier, thixotroper Desinfektionsmittelzubereitungen, die ein erfindungsgemäß zu verwendendes Mittel enthalten und ohne Einwirken von Scherkräften eine derartige Viskosität aufweisen, daß sie bei Raumtemperatur unter Einwirken der Schwerkraft nicht fließfähig sind, bei Scherung aber eine deutlich niedrigere Viskosität aufweisen und unter Einwirken der Schwerkraft fließfähig sind.

Es ist bevorzugt, wenn derartige Zubereitungen bei 25°C unter Einsatz eines Brookfield^{(R)}-Rotationsviskosimeters DV-II oder DV-II plus mit Spindel Nr. 7 bei 5 Umdrehungen pro Minute eine Viskosität über 50 000 mPa·s, insbesondere von 100 000 mPa·s bis 500 000 mPa·s, und bei 50 Umdrehungen pro Minute eine Viskosität unter 100 000 mPa·s, besonders bevorzugt von 8 000 mPa·s bis 90 000 mPa·s aufweisen.

Bevorzugt ist es, wenn diese pastenförmigen, im wesentlichen wasserfreien, thixotropen Desinfektionsmittelzubereitung 20 Gew.-% bis 80 Gew.-% eines erfindungsgemäß zu verwendenden tensidischen Mittels enthalten, wobei in der Zubereitung 20 Gew.-% bis 80 Gew.-% feste pulverförmige Bestandteile mit einer mittleren Korngröße von 2 µm bis 100 µm, vorzugsweise 10 µm bis 80 µm und insbesondere 20 µm bis 60 µm vorliegen und die Zubereitung bei 20 °C eine Viskosität im Bereich von 10 000 mPa·s bis 500 000 mPa·s bei einer Schergeschwindigkeit von 0,025 s⁻¹, sowie bei einer Schergeschwindigkeit von 0,2 s⁻¹ eine Viskosität im Bereich von 5 000 mPa·s bis 130 000 mPa·s, insbesondere von 5 000 mPa·s bis 13 000 mPa·s, und bei einer Schergeschwindigkeit von 2 s⁻¹ eine Viskosität im Bereich von 400 mPa·s bis 10 000 mPa·s, insbesondere von 400 mPa·s bis 1 600 mPa·s, aufweist.
Die in der Beschreibung erwähnte Schergeschwindigkeitswerte beziehen sich auf Werte bei Einsatz eines Plattenviskosimeters Carrimed® CS 100 mit gerillter 2-cm-Platte (cross Hatch Flat Plate), Plattenabstand 1,5 cm.

Die Herstellung einer erfindungsgemäßen, pastenförmigen, im wesentlichen wasserfreien, thixotropen Desinfektionsmittelzubereitung erfolgt, indem man zu dem bei Temperaturen von Raumtemperatur bis 40 °C vorgelegten, erfindungsgemäß zu verwendenden tensidischen Mittel in einem üblichen Rührkessel möglichst unter Vermeidung von übermäßigem Lufteintrag die sonstigen festen Bestandteile, welche einzeln oder als zwei oder mehrere Pulverkomponenten enthaltende Mischungen vorliegen können, zumischt.
Dabei ist es bevorzugt, die Komponente, die unter den festen Bestandteilen den größten Mengenanteil der festen Phase ausmacht als letzten zuzusetzen. Diese Vorgehensweise wird ganz besonders bevorzugt, wenn diese Komponente ein Alkalisilikat ist.
Gleichfalls möglich ist die taktweise Zugabe der feinteiligen Hauptkomponente, das heißt die Zugabe jeweils eines Teils der Hauptkomponente, insbesondere Alkalisilikat, im Wechsel mit den festen Nebenkomponenten.
Nach dem Vermischen der Feststoffe mit dem Tensidvorgemisch wird die entstehende Paste vorzugsweise in einer Mahlvorrichtung, beispielsweise einer Kolloidmühle, auf die für die Festphase angegebene Korngröße vermahlen, falls die eingesetzten feinteiligen Feststoffe die angestrebten Korngrößen nicht schon besaßen Zweckmäßigerweise wird daran anschließend in einem weiteren Rührkessel eine abschließende Durchmischung der vermahlenenen Feststoffbestandteile mit der flüssigen Phase vorgenommen, wobei auch insbesondere thermisch empfindliche Minderkomponenten, beispielsweise Bleichmittel, Farb- und/oder Duftstoffe sowie Enzyme, insbesondere Proteasen, Amylasen, Lipasen und/oder Cellulase und gegebenenfalls Enzymstabilisatoren, insbesondere nieder Carbonsäuren oder Calciumverbindungen, in die Paste eingearbeitet werden können.

Ein weiterer Gegenstand der vorliegenden Anmeldung besteht in einem tensidischen Gel, das, bezogen auf das gesamte Mittel,
a) 5 bis 100 Gew.% von einem oder mehreren nichtionischen Tensiden der allgemeinen Formel (I),

   R¹-(OC₂H₄)ₙ-(OC₃H₆)ₘ-OH (I)

   in der R¹ ein geradkettiger oder verzweigter Alkyl- oder Alkenylrest mit 12 C-Atomen ist und die Summe aus mittlerem Ethoxylierungsgrad n und mittlerem Propoxylierungsgrad m zwischen 0,5 und 5 liegt, und/oder
b) 5 bis 100 Gew.% von einem oder mehreren nichtionischen Tensiden der allgemeinen Formel (II),

   R²-(OC₂H₄)ᵣ-(OC₃H₆)ₛ-OH (II)

   in der R² ein geradkettiger oder verzweigter Alkyl- oder Alkenylrest mit 11 oder 13 C-Atomen ist und die Summe aus mittlerem Ethoxylierungsgrad r und mittlerem Propoxylierungsgrad s zwischen 0,5 und 5 liegt, und
c) gegebenenfalls Wasser und/oder weitere Hilfs- und/oder Wirkstoffe enthält, wobei die Summe aller Bestandteile 100 Gew.% nicht überschreitet, zur Desinfektion in den Bereichen Haushalt, lebensmittelherstellende und -verarbeitende Industrie, Kosmetik- und Pharmaindustrie, Krankenhäusern, Wäschereien, Großküchen, Gebäudereinigung und Landwirtschaft.

### Beispiele

### Beispiel 1:

In einer Versuchsserie wurde das antimikrobielle Wirkungsspektrum verschiedener nichtionischer Tenside (NIO-Tenside) der Formel III

R³-(OC₂H₄)ₐ-(OC₃H₆)_{b}-OH (III)

im Suspensionstest in Anlehnung an die DGHM-Methode untersucht. Alle in dieser Versuchsserie enthaltenen Tenside wurden in alkalisch wäßrigen Lösungen in einer Konzentration von 0,11 Gew.% Tensid untersucht. Zur Herstellung der tensidischen alkalisch wäßrigen Lösungen wurde von Tensidkonzentraten mit einem Anteil vor. 5 bis 100 Gew.% des entsprechenden Tensids ausgegangen. Der pH-Wert der untersuchten Lösungen wurde durch Zugabe von NaOH auf 11,3 eingestellt.
Der Suspensionstest wurde gemäß den Richtlinien der DGHM durchgeführt (J. Borneff et al., Richtlinien für die Prüfung und Bewertung chemischer Desinfektionsverfahren, Zbl. Bakt. I. Abt., B172 (1981) 504-562). Dabei wird eine Bakteriensuspension in die zu prüfende Anwendungskonzentration des betreffenden Mittles bei der zu prüfenden Temperatur eingebracht. Nach definierten Einwirkzeiten wird ein Aliquot dieses Gemisches entnommen und die Einwirkung des desinfizierenden Mittels durch Verdünnung und Neutralisation (Inaktivierung) mit geeigneten Substanzen unmittelbar gestoppt. Danach erfolgt die Bestimmung der Zahl der überlebenden Testkeime durch Koloniezahlbestimmung im Oberflächenverfahren. Zum Vergleich wird ein entsprechender Versuchsansatz mit Wasser statt Desinfektionsmittel bei 20°C durchgeführt. Die Differenz der dekadischen Logarithmen der Koloniezahlen mit und ohne Einwirkung des Desinfektionsmittels ergibt den logarithmischen Reduktionsfaktor (RF).
Die Ergebnisse sind in Tabelle 1 dargelegt. In der Tabelle wird auf die Formel III Bezug genommen, wobei a dem mittleren Ethoxylierungsgrad und b dem mittleren Propoxylierungsgrad sowie c der Summe aus a und b entspricht.
R³ entspricht dem Alkyl-Teil des nichtionischen Tensids. Dieser ist, sofern nicht anders in der Tabelle vermerkt, unverzweigt und gesättigt.

Als Testkeim zur Ermittlung der antimikrobiellen Wirksamkeit wurde Enterococcus faecium (ATCC6057) herangezogen. Zur Simulierung organischer Belastung wurden 0,2 % RSA (Rinderserumalbumin) im Suspensionstest verwendet. Die Abtötungsergebnisse wurden zum einen nach 1 Minute und zum anderen nach 5 Minuten ermittelt.

**Tabelle 1:**

| Antimikrobielle Wirksamkeit ausgewählter NIO-Tenside mit unterschiedlich langen gesättigten Alkylgruppen R³ sowie Ethoxylierungs-(a) und Propoxylierungsgraden (b) bei 60°C im quantitativen Suspensionstest in Anlehnung an DGHM | | | | | | |
|---|---|---|---|---|---|---|
| Chemie des untersuchten NIO-Tensids gemäß Formel III | | | | | RF/geg. Enterococcus faec. | |
| Tensid-Nr | R³ | a | b | c | Nach 1 Min. | Nach 5 Min. |
| 1 | C₁₁ | 1 | 0 | 1 | 3,11 | >4,97 |
| 2 | C₁₁ | 0 | 1 | 1 | <1.10 | >4,97 |
| 3 | C_{12/14} | 3 | 0 | 3 | 2,06 | >4,76 |
| 4 | C_{13/15} | 4 | 0 | 4 | 1,70 | 4,04 |
| 5 | i-C₁₃ | 5 | 0 | 5 | 1,36 | >4,76 |
| 6 | C_{12/14} | 5 | 4 | 9 | <0,93 | 2,78 |
| 7 | C_{12/14} | 7 | 0 | 7 | <1,35 | 3,03 |
| 8 | C_{13/15} | 7 | 0 | 7 | 1,04 | 3,80 |
| 9 | C_{16/18} | 5 | 0 | 5 | <1,35 | 1,45 |
| 10 | C₁₂₋₁₈ | 10 | 0 | 10 | <0,93 | 1,39 |
| 11 | C_{16/18} | 14 | 0 | 14 | <1,35 | <0,99 |
| RF-Werte = Keimreduktion in LOG-Stufen | | | | | | |

Aus den tabellierten Ergebnissen ist zu entnehmen, daß durch ausgewählte NIO-Tenside die antimikrobielle Leistung von tensidischen Lösungen wesentlich verbessert werden kann. Es ist außerdem festzustellen, daß insbesondere NIO-Tenside mit gewissen Alkylkettenlängen und bestimmten Ethoxylierungs- bzw. Propoxylierungsgraden das Desinfektionsvermögen von tensidischen Lösungen unterstützen. Dies ist insbesondere deshalb wichtig, da dadurch die Auswahl von nichtionischen Tensiden vor dem Hintergrund der Verwendung in Reinigungs- und Desinfektionsvorgängen bei verstärkter Berücksichtigung des hygienischen Aspekts einen wesentlich höheren Stellenwert erhält, als es in der Vergangenheit der Fall war.

### Beispiel 2:

In dem hier dargelegten zweiten Beispiel wurden zwei pastenförmige Produkte, die erfindungsgemäße tensidische Mittel enthielten, im chemothermischen Wäschedesinfektionsversuch auf ihre mikrobizide Wirksamkeit gegenüber Enterococcus faecium geprüft.
Zur Durchführung der Versuche sei u.a. auf die Ausführungen der Desinfektionsmittelkommission der Deutschen Gesellschaft für Hygiene und Mikrobiologie in der Zeitschrift Hyg. Med. 23. Jahrgang 1998 - Heft 4 / Seite 127 verwiesen.
Die Rezepturen der geprüften Pasten sind aus Tabelle 2 zu entnehmen:

**Tabelle 2:**

| Zusammensetzung pastenförmiger desinfizierender Waschmittel-Rezepturen | | |
|---|---|---|
| Rohstoffe | Gew.% in der Rezeptur | |
| | Paste 1 | Paste 2 |
| NIO-Tensid gemäß Formel III mit R³= C_{12/14} und a=3, b=0, c=3 | ²⁶ | ¹⁰ |
| NIO-Tensid gemäß Formel III mit R³= i-C₁₃ und a=3, b=0, c=3 | 12 | 23 |
| Isotridecanol | 0 | 5 |
| Alkylbenzolsulfonat | 2,5 | 2,5 |
| Nitrilotriessigsäure (NTA) | 4 | 4 |
| Polyacrylat | 6 | 6 |
| Natrium-Phosphonat | 1 | 1 |
| Natrium-Metasilikat | 46 | 46 |
| Optischer Aufheller | 0,5 | 0,5 |
| Schauminhibitor | 1 | 1 |
| C_{16/22}-Fettsäure Natriumsalz | 1 | 1 |

Die Prüfbedingungen der mit diesen Rezepturen durchgeführten mikrobiologischen Untersuchungen stellten sich wie folgt dar:

### Versuchsbedingungen:

- Versuch 1:: 3 g Paste 1 pro Liter Waschflotte
- Versuch 2:: 3 g Paste 2 pro Liter Waschflotte

- Waschflotte:: 37,5 Liter
- Waschgut:: 7,5 kg vorgewaschene, desinfizierte Küchentücher (Trockenwäsche)
- Lösungsmittel:: permutiertes Wasser, 0° dH
- Einwirkzeit und Prüftemperaturen:: 5 Minuten 30 °C (Ist-Temperatur: 30 °C (Versuch 1 und 2)) + 15 Minuten 60 °C (Ist-Temperatur: 60 °C (Versuch 1 und 2))
- Belastung:: 12,5 ml defibriniertes Schafblut pro kg Trockenwäsche
- Keimspektrum:: Enterococcus faecium ATCC 6057 (K3330)
- Inaktivierungsmittel:: TLH-Na Thiosulfat
- Testdauer:: 4 Wochen

### Ergebnisse:

Die Ergebnisse im Einzelnen sind den Tabellen 3 und 4 zu entnehmen.

Die Testanforderungen für ein wirksames Wäschedesinfektionsverfahren, wonach
1. die Zahl der Testkeime auf den Keimträgern durch das Verfahren um 6 log-Stufen reduziert werden muß und gleichzeitig
2. auf den zuvor sterilen aber im Versuch mitgewaschenen Keimträgern kein Testkeim mehr nachweisbar sein darf,
konnten unter den geprüften Testparametem von beiden Produkten nach 15 Minuten Einwirkungszeit bei 60 °C in der Frista Waschmaschine erfüllt werden.

**Tabelle 3:**

| Chemothermische Wäschedesinfektion im Versuch 1 Angabe der Ergebnisse in Reduktionsfaktoren (RF) nach 15 Minuten Einwirkzeit bei 60 °C | | | | |
|---|---|---|---|---|
| **Paste 1 (3 g/l Waschflotte)** | | | | |
| **Testkeim** | **Keimzahl pro Keimträger** | **Kontrollwerte zur Ermittlung der RF-Werte** | **Einzelwerte (RF)** | **Testkeimgehalt auf 3 sterilen mitgewaschenen Keimträgern** |
| Enterococcus | 5,86 x 10⁷ | 7,77 | 7,55 | <1 |
| Faecium | | | 7,25 | <1 |
| ATCC 6057 | | | >7,77 | <1 |
| | | | 7,25 | <1 |
| | | | 7,25 | <1 |

**Tabelle 4:**

| Chemothermische Wäschedesinfektion im Versuch 2 Angabe der Ergebnisse in Reduktionsfaktoren (RF) nach 15 Minuten Einwirkzeit bei 60 °C | | | | |
|---|---|---|---|---|
| **Paste 2 (3 g/l Waschflotte)** | | | | |
| **Testkeim** | **Keimzahl pro Keimträger** | **Kontrollwerte zur Ermittlung der RF-Werte** | **Einzelwerte (RF)** | **Testkeimgehalt auf 3 sterilen mitge- waschenen Keimträgern** |
| Enterococcus | 3,71 x 10⁷ | 7,57 | >7,57 | <1 |
| Faecium | | | >7,57 | <1 |
| ATCC 6057 | | | >7,57 | <1 |
| | | | 7,35 | <1 |
| | | | >7,57 | <1 |
| | | | | <1 |

## Patentansprüche

1. Verwendung eines tensidischen Mittels, das bezogen auf das gesamte Mittel
a) 5 bis 100 Gew.% von einem oder mehreren nichtionischen Tensiden der allgemeinen Formel (I),
R¹-(OC₂H₄)ₙ-(OC₃H₆)ₘ-OH (I)
in der R¹ ein geradkettiger oder verzweigter Alkyl- oder Alkenylrest mit 12 C-Atomen ist und die Summe aus mittlerem Ethoxylierungsgrad n und mittlerem Propoxylierungsgrad m zwischen 0,5 und 5 liegt, und/oder
b) 5 bis 100 Gew.% von einem oder mehreren nichtionischen Tensiden der allgemeinen Formel (II),
R²-(OC₂H₄)ᵣ-(OC₃H₆)ₛ-OH (II)
in der R² ein geradkettiger oder verzweigter Alkyl- oder Alkenylrest mit 11 oder 13 C-Atomen ist und die Summe aus mittlerem Ethoxylierungsgrad r und mittlerem Propoxylierungsgrad s zwischen 0,5 und 5 liegt, und
c) gegebenenfalls Wasser und/oder weitere Hilfs- und/oder Wirkstoffe enthält, wobei die Summe aller Bestandteile 100 Gew.% nicht überschreitet, zur Desinfektion in den Bereichen Haushalt, lebensmittelherstellende und -verarbeitende Industrie, Kosmetik- und Pharmaindustrie, Krankenhäusern, Wäschereien, Großküchen, Gebäudereinigung und Landwirtschaft.

2. Verwendung nach Anspruch 1, **dadurch gekennzeichnet, daß** in dem Mittel zusätzlich bis zu 40 Gew.-% bei Raumtemperatur festes Aniontensid, insbesondere Alkylbenzolsulfonsäure, Alkali-Alkylbenzolsulfonat und/oder Alkali-Alkyl- oder Alkenylsulfat, enthalten sind.

3. Verwendung nach einem der Ansprüche 1 oder 2, **dadurch gekennzeichnet, daß** in dem Mittel 5 bis 60 Gew.-% nichtionisches Tensid der allgemeinen Formel (I), und 5 bis 60 Gew.-% nichtionisches Tensid der allgemeinen Formel (II) enthalten sind.

4. Verwendung nach einem der Ansprüche 1 bis 3, **dadurch gekennzeichnet, daß** in dem Mittel 5 bis 40 Gew.-% nichtionisches Tensid der allgemeinen Formel (I), und 5 bis 40 Gew.-% nichtionisches Tensid der allgemeinen Formel (II) enthalten sind.

5. Verwendung nach einem der Ansprüche 1 bis 4, **dadurch gekennzeichnet, daß** für das nichtionische Tensid gemäß Formel (I) die Summe aus mittlerem Ethoxylierungsgrad n und mittlerem Propoxylierungsgrad m zwischen 1 und 3, und für das nichtionische Tensid gemäß Formel (II) die Summe aus mittlerem Ethoxylierungsgrad r und mittlerem Propoxylierungsgrad s zwischen 1 und 3, liegt.

6. Verwendung nach einem der Ansprüche 1 bis 5, **dadurch gekennzeichnet, daß** das Gewichts-Verhältnis von a) : b) im Gemisch zwischen 4:1 und 1:4 liegt.

7. Verwendung nach einem der Ansprüche 1 bis 6, **dadurch gekennzeichnet, daß** in dem Mittel zusätzliche Komponenten mit komplexbildenden Eigenschaften und /oder Solubilisierungsmittel und /oder oberflächenaktive Komponenten, enthalten sind

8. Verwendung nach einem der Ansprüche 1 bis 7, **dadurch gekennzeichnet, daß** zusätzliche antimikrobielle Komponenten, ausgewählt aus Alkoholen, Aldehyden, antimikrobiellen Säuren, Carbonsäureestem, Säureamiden, Phenolen, Phenolderivaten, Diphenylen, Diphenylalkanen, Hamstoffderivaten, Sauerstoff-, Stickstoff-Acetalen sowie -Formalen, Benzamidinen, Isothiazolinen, Phthalimidderivaten, Pyridinderivaten, antimikrobiellen oberflächenaktiven Verbindungen, Guanidinen, antimikrobiellen amphoteren Verbindungen, Chinolinen, 1,2-Dibrom-2,4-dicyanobutan, lodo-2-propynyl-butyl-carbamat, lod, lodophoren, Peroxiden enthalten sind.

9. Verwendung nach einem der Ansprüche 1 bis 8, **dadurch gekennzeichnet, daß** das Mittel als wäßrige Lösung, Gel, Emulsion, Paste, Dispersion, fester Formkörper, Pulver vorliegt.

10. Verwendung nach einem der Ansprüche 1 bis 9, **dadurch gekennzeichnet, daß** das Mittel in konzentrierter oder verdünnter Form im Tauchverfahren oder durch Befüllen des zu desinfizierenden Gegenstandes und/oder über Auftrage-Hilfsmittel mit den zu reinigenden und/oder desinfizierenden Oberflächen in Kontakt gebracht wird.

11. Verwendung nach einem der Ansprüche 1 bis 10, **dadurch gekennzeichnet, daß** Textilien bei niedrigen Temperaturen zwischen 10 und 70 °C, mit einem Mittel gemäß einem der Ansprüche 1 bis 10 in konzentrierter oder verdünnter Form desinfizierend gewaschen werden.

12. Verwendung nach Anspruch 11, **dadurch gekennzeichnet, daß** unter den genannten Bedingungen auch ohne Zusatz von Persäuren ausreichende desinfizierende Wirkung vorliegt.

13. Verwendung eines gemäß einem der Ansprüche 1 bis 12 zu verwendenden Mittels zur Zubereitung einer pastenförmigen, im wesentlichen wasserfreien, thixotropen Desinfektionsmittelzubereitung, die ohne Einwirken von Scherkräften eine derartige Viskosität aufweist, daß sie bei Raumtemperatur unter Einwirken der Schwerkraft nicht fließfähig ist, bei Scherung aber eine deutlich niedrigere Viskosität aufweist und unter Einwirken der Schwerkraft fließfähig ist.

14. Verwendung nach Anspruch 13, **dadurch gekennzeichnet, daß** die genannte Zubereitung bei 25 °C unter Einsatz eines Brookfield^{(R)}-Rotationsviskosimeters DV-II oder DV-II plus mit Spindel Nr. 7 bei 5 Umdrehungen pro Minute eine Viskosität über 100 000 mPa.s, insbesondere von 150 000 mPa.s bis 500 000 mPa.s, und bei 50 Umdrehungen pro Minute eine Viskosität unter 100 000 mPa.s insbesondere von 10 000 mPa·s bis 90 000 mPa·s aufweist.

15. Verwendung eines gemäß einem der Ansprüche 1 bis 10 zu verwendenden Mittels zur Zubereitung einer pastenförmigen, im wesentlichen wasserfreien, thixotropen Desinfektionsmittetzubereitung, enthaltend 20 Gew.-% bis 80 Gew.-% des zu verwendenden Mittels, sowie 20 Gew.-% bis 80 Gew.-% feste pulverförmige Bestandteile mit einer mittleren Korngröße von 5 µm bis 100 µm. vorzugsweise 10 µm bis 80 µm und insbesondere 10 µm bis 60 µm, wobei die Zubereitung bei 20 °C eine Viskosität im Bereich von 10 000 mPa·s bis 500 000 mPa·s bei einer Schergeschwindigkeit von 0,025 s⁻¹ sowie bei einer Schergeschwindigkeit von 0,2 s⁻¹ eine Viskosität im Bereich von 5 000 mPa·s bis 130 000 mPa·s, insbesondere von 5 000 mPa·s bis 13 000 mPa·s, und bei einer Schergeschwindigkeit von 2 s⁻¹ eine Viskosität im Bereich von 400 mPa·s bis 10 000 mPa·s, insbesondere von 400 mPa·s bis 1 600 mPa·s, aufweist.

16. Verwendung eines gemäß einem der Ansprüche 1 bis 12 zu verwendenden Mittels oder einer in den Ansprüchen 13 bis 15 genannten Zubereitung zur Abtötung von Enterococcus faecium.

17. Tensidisches Gel enthaltend, bezogen auf das gesamte Gel,
a) 5 bis 100 Gew.% von einem oder mehreren nichtionischen Tensiden der allgemeinen Formel (I),
R¹-(OC₂H₄)ₙ-(OC₃H₆)ₘ-OH (I)
in der R¹ ein geradkettiger oder verzweigter Alkyl- oder Alkenylrest mit 12 C-Atomen ist und die Summe aus mittlerem Ethoxylierungsgrad n und mittlerem Propoxylierungsgrad m zwischen 0,5 und 5 liegt, und/oder
b) 5 bis 100 Gew.% von einem oder mehreren nichtionischen Tensiden der allgemeinen Formel (II),
R²-(OC₂H₄)ᵣ-(OC₃H₆)ₛ-OH (II)
in der R² ein geradkettiger oder verzweigter Alkyl- oder Alkenylrest mit 11 oder 13 C-Atomen ist und die Summe aus mittlerem Ethoxylierungsgrad r und mittlerem Propoxylierungsgrad s zwischen 0,5 und 5 liegt, und
c) gegebenenfalls Wasser und/oder weitere Hilfs- und/oder Wirkstoffe enthält, wobei die Summe aller Bestandteile 100 Gew.% nicht überschreitet, zur Desinfektion in den Bereichen Haushalt, lebensmittelherstellende und -verarbeitende Industrie, Kosmetik- und Pharmaindustrie, Krankenhäusern, Wäschereien, Großküchen, Gebäudereinigung und Landwirtschaft.

## Claims

1. Use of a surface-active agent which, based on the overall agent, includes
a) 5 to 100% by weight of one or more non-ionic surfactants of general formula (I):
R¹-(OC₂H₄)ₙ-(OC₃H₆)ₘ-OH (I)
wherein R¹ is a straight-chain or branched alkyl or alkenyl residue having 12 C atoms, and the sum of the average degree of ethoxylation n and average degree of propoxylation m is between 0.5 and 5, and/or
b) 5 to 100% by weight of one or more non-ionic surfactants of general formula (II):
R²-(OC₂H₄)ᵣ-(OC₃H₆)ₛ-OH (II)
wherein R² is a straight-chain or branched alkyl or alkenyl residue having 11 or 13 C atoms, and the sum of the average degree of ethoxylation r and average degree of propoxylation s is between 0.5 and 5, and
c) optionally water and/or other auxiliaries and/or active substances, the sum of all the constituents not exceeding 100% by weight,
in the disinfection in the sectors of household, food manufacturing and processing industries, cosmetics and pharmaceutical industries, hospitals, laundries, large kitchens, cleaning of buildings, and agriculture.

2. The use according to claim 1, **characterized in that** the agent additionally includes up to 40% by weight of anionic surfactant solid at room temperature, more particularly alkylbenzenesulfonic acid, alkali alkylbenzenesulfonate and/or alkali alkyl or alkenyl sulfate.

3. The use according to claim 1 or 2, **characterized in that** the agent includes 5 to 60% by weight of non-ionic surfactant of general formula (I) and 5 to 60% by weight of non-ionic surfactant of general formula (II).

4. The use according to any of claims 1 to 3, **characterized in that** the agent includes 5 to 40% by weight of non-ionic surfactant of general formula (I) and 5 to 40% by weight of non-ionic surfactant of general formula (II).

5. The use according to any of claims 1 to 4, **characterized in that** the sum of the average degree of ethoxylation n and average degree of propoxylation m is between 1 and 3 in the non-ionic surfactant according to formula (I), and the sum of the average degree of ethoxylation r and average degree of propoxylation s is between 1 and 3 in the non-ionic surfactant according to formula (II).

6. The use according to any of claims 1 to 5, **characterized in that** the weight ratio of a) to b) in the mixture is between 4:1 and 1:4.

7. The use according to any of claims 1 to 6, **characterized in that** the agent includes additional components having complexing properties and/or solubilizers and/or surface-active components.

8. The use according to any of claims 1 to 7, **characterized in that** additional antimicrobial components selected from alcohols, aldehydes, antimicrobial acids, carboxylic esters, acid amides, phenols, phenol derivatives, diphenyls, diphenylalkanes, urea derivatives, oxygen and nitrogen acetals and formals, benzamidines, isothiazolines, phthalimide derivatives, pyridine derivatives, antimicrobial surface-active compounds, guanidines, antimicrobial amphoteric compounds, quinolines, 1,2-dibromo-2,4-dicyanobutane, iodo-2-propynylbutyl carbamate, iodine, iodophors, peroxides are included.

9. The use according to any of claims 1 to 8, **characterized in that** the agent is present in the form of an aqueous solution, a gel, an emulsion, a paste, dispersion, solid molding, powder.

10. The use according to any of claims 1 to 9, **characterized in that** the agent is contacted with the surfaces to be cleaned and/or disinfected in concentrated or dilute form in an immersion process or by filling the item to be disinfected and/or via coating aids.

11. The use according to any of claims 1 to 10, **characterized in that** textiles are washed and at the same time disinfected with an agent according to any of claims 1 to 10 in concentrated or dilute form at low temperatures between 10 and 70°C.

12. The use according to claim 11, **characterized in that**, under the conditions mentioned, sufficient disinfection is achieved even without addition of peracids.

13. Use of an agent to be used in accordance with any of claims 1 to 12 for the preparation of a pasty, substantially anhydrous, thixotropic disinfectant formulation which, without exposure to shear forces, has such a viscosity that it cannot flow under the effect of gravity at room temperature, but has a distinctly lower viscosity and is flowable under the effect of gravity when subjected to shearing.

14. The use according to claim 13, **characterized in that** the formulation mentioned has a viscosity at 25°C of more than 100,000 mPas and more particularly from 150,000 to 500,000 mPas when using a Brookfield® DV-II or DV-II Plus rotational viscosimeter with spindle No. 7 at 5 r.p.m and less than 100,000 mPas and more particularly from 10,000 mPas to 90,000 mPas at 50 r.p.m..

15. Use of an agent to be used in accordance with any of claims 1 to 10 for the preparation of a pasty, substantially anhydrous, thixotropic disinfectant formulation containing 20% by weight to 80% by weight of the agent to be used and 20% by weight to 80% by weight of solid powdered constituents with a mean grain size of from 5 µm to 100 µm, preferably from 10 µm to 80 µm and more particularly from 10 µm to 60 µm, the formulation having a viscosity at 20°C in a range of from 10,000 to 500,000 mPas at a shear rate of 0.025 s⁻¹, a viscosity in a range of from 5,000 to 130,000 mPas and more particularly from 5,000 mPas to 13,000 mPas at a shear rate of 0.2 s⁻¹, and a viscosity in a range of from 400 mPas to 10,000 mPas and more particularly from 400 mPas to 1,600 mPas at a shear rate of 2 s⁻¹.

16. Use of an agent to be used in accordance with any of claims 1 to 12 or of a formulation as specified in claims 13 to 15 for the destruction of *Enterococcus faecium.*

17. A surface-active gel which, based on the overall gel, includes
a) 5 to 100% by weight of one or more non-ionic surfactants of general formula (I):
R¹-(OC₂H₄)ₙ-(OC₃H₆)ₘ-OH (I)
wherein R¹ is a straight-chain or branched alkyl or alkenyl residue having 12 C atoms, and the sum of the average degree of ethoxylation n and average degree of propoxylation m is between 0.5 and 5, and/or
b) 5 to 100% by weight of one or more non-ionic surfactants of general formula (II):
R²-(OC₂H₄)ᵣ-(OC₃H₆)ₛ-OH (II)
wherein R² is a straight-chain or branched alkyl or alkenyl residue having 11 or 13 C atoms, and the sum of the average degree of ethoxylation r and average degree of propoxylation s is between 0.5 and 5, and
c) optionally water and/or other auxiliaries and/or active substances, the sum of all the constituents not exceeding 100% by weight,
in the disinfection in the sectors of household, food manufacturing and processing industries, cosmetics and pharmaceutical industries, hospitals, laundries, large kitchens, cleaning of buildings, and agriculture.

## Revendications

1. Utilisation d'un produit tensioactif comprenant, par rapport au produit total,
a) de 5 à 100 % en poids d'un ou de plusieurs tensioactifs non ioniques de formule générale (I),
R¹-(OC₂H₄)n-(OC₃H₆)ₘ-OH (I)
dans laquelle R¹ est un radical alkyle ou alcényle linéaire ou ramifié, ayant 12 atomes de C, et dans laquelle la somme du degré moyen d'éthoxylation n et du degré moyen de propoxylation m se situe entre 0,5 et 5, et/ou
b) de 5 à 100 % en poids d'un ou de plusieurs tensioactifs non ioniques de formule générale (II),
R²-(OC₂H₄)r-(OC₃H₆)ₛ-OH (II)
dans laquelle R² est un radical alkyle ou alcényle linéaire ou ramifié, ayant 11 ou 13 atomes de C, et dans laquelle la somme du degré moyen d'éthoxylation r et du degré moyen de propoxylation s se situe entre 0,5 et 5, et
c) le cas échéant, de l'eau et/ou d'autres additifs et agents, la somme de tous les composants ne dépassant pas 100 % en poids, pour la désinfection dans les domaines du ménage domestique, de l'industrie de préparation et de transformation des produits alimentaires, dans l'industrie cosmétique et pharmaceutique, des hôpitaux, des laveries, des cuisines industrielles, de l'assainissement des bâtiments et de l'agriculture.

2. Utilisation selon la revendication 1, **caractérisée en ce que** le produit contient en plus jusqu'à 40 % en poids de tensioactif anionique solide à température ambiante, en particulier d'un acide alkylbenzènesulfonique, d'un alkylbenzènesulfonate alcalin et/ou d'un alkyl- ou alcénylsulfate alcalin.

3. Utilisation selon l'une des revendications 1 ou 2, **caractérisée en ce que** le produit contient de 5 à 60 % en poids du tensioactif non ionique de formule générale (I), et de 5 à 60 % en poids du tensioactif non ionique de formule générale (II).

4. Utilisation selon l'une des revendications 1 à 3, **caractérisée en ce que** le produit contient de 5 à 40 % en poids du tensioactif non ionique de formule générale (I), et de 5 à 40 % en poids du tensioactif non ionique de formule générale (II).

5. Utilisation selon l'une des revendications 1 à 4, **caractérisée en ce que**, pour le tensioactif non ionique selon la formule (I), la somme du degré moyen d'éthoxylation n et du degré moyen de propoxylation m se situe entre 1 et 3 et, pour le tensioactif non ionique selon la formule (II), la somme du degré moyen d'éthoxylation r et du degré moyen de propoxylation s se situe entre 1 et 3.

6. Utilisation selon l'une des revendications 1 à 5, **caractérisée en ce que** le rapport en poids de a)/b) dans le mélange se situe entre 4/1 et 1/4.

7. Utilisation selon l'une des revendications 1 à 6, **caractérisée en ce que** le produit comprend des composés supplémentaires ayant des propriétés complexantes et/ou des agents de solubilisation et/ou des composés tensioactifs.

8. Utilisation selon l'une des revendications 1 à 7, **caractérisée en ce que** des composés antimicrobiens supplémentaires, choisis parmi les alcools, les aldéhydes, les acides antimicrobiens, les esters d'acides carboxyliques, les amides d'acide, les phénols, les dérivés phénoliques, le diphénylène, les alcanes diphényliques, les dérivés d'urée, les acétals et les formals d'oxygène et d'azote, les benzamidines, les isothiazolines, les dérivés de phtalimide, les dérivés de pyridine, les composés tensioactifs antimicrobiens, les guanidines, les composés amphotères antimicrobiens, les quinolines, le 1,2-dibromo-2,4-dicyanobutane, l'iodo-2-propynyl-butylcarbamate, l'iode, les iodophores et les peroxydes, sont présents.

9. Utilisation selon l'une des revendications 1 à 8, **caractérisée en ce que** le produit se présente sous forme de solution aqueuse, de gel, d'émulsion, de pâte, de dispersion, de corps solide ou de poudre.

10. Utilisation selon l'une des revendications 1 à 9, **caractérisée en ce que** le produit est amené au contact des surfaces à nettoyer et/ou à désinfecter sous forme concentrée ou diluée, dans un procédé d'immersion ou par remplissage de l'objet à désinfecter et/ou par des moyens auxiliaires d'application.

11. Utilisation selon l'une des revendications 1 à 10, **caractérisée en ce que** des textiles sont lavés et désinfectés à des basses températures situées entre 10 et 70°C, avec un produit selon l'une des revendications 1 à 10 sous forme concentrée ou diluée.

12. Utilisation selon la revendication 11, **caractérisée en ce qu'**une action désinfectante suffisante existe dans les conditions susmentionnées également sans addition de peracides.

13. Utilisation d'un produit à utiliser selon l'une des revendications 1 à 12, pour la préparation d'une composition de produits désinfectants thixotrope, sensiblement anhydre et sous forme de pâte, qui présente une viscosité en l'absence de l'action de force de cisaillement, telle qu'elle ne s'écoule pas à température ambiante sous l'action de la gravité, et qui présente cependant, en cas de cisaillement, une viscosité nettement inférieure et qui s'écoule sous l'action de la gravité.

14. Utilisation selon la revendication 13, **caractérisée en ce que** ladite composition présente à 25°C, en utilisant un viscosimètre rotatif Brookfield® DV-II ou DV-II plus pourvu d'une tige n°7 et à 5 tours par minute, une viscosité supérieure à 100 000 mPas, en particulier allant de 150 000 mPas à 500 000 mPas et, à 50 tours par minute, une viscosité inférieure à 100 000 mPas, en particulier allant de 10 000 mPas à 90 000 mPas.

15. Utilisation d'un produit à utiliser selon l'une des revendications 1 à 10, pour la préparation d'une composition de produits désinfectants thixotrope, sensiblement anhydre et sous forme de pâte, contenant de 20 % en poids à 80 % en poids du produit à utiliser et de 20 % en poids à 80 % en poids de composés solides sous forme de poudre, avec une granulométrie moyenne allant de 5 µm à 100 µm, de préférence de 10 µm à 80 µm et en particulier de 10 µm à 60 µm, la composition présentant à 20°C une viscosité située dans une plage allant de 10 000 mPas à 500 000 mPas à une vitesse de cisaillement de 0,025 s⁻¹ et, à une vitesse de cisaillement de 0,2 s⁻¹, une viscosité située dans une plage allant de 5000 mPas à 130 000 mPas, en particulier de 5000 mPas à 13 000 mPas et, à une vitesse de cisaillement de 2 s⁻¹, une viscosité dans une plage allant de 400 mPas à 10 000 mPas, en particulier de 400 mPas à 1600 mPas.

16. Utilisation d'un produit à utiliser selon l'une des revendications 1 à 12 ou de ladite composition selon une des revendications 13 à 15, pour la destruction de Entorococcus faecium.

17. Gel tensioactif, contenant, par rapport au gel total,
a) de 5 à 100 % en poids d'un ou de plusieurs tensioactifs non ioniques de formule générale (I),
R¹-(OC₂H₄)n-(OC₃H₆)ₘ-OH (I)
dans laquelle R¹ est un radical alkyle ou alcényle linéaire ou ramifié ayant 12 atomes de C et dans laquelle la somme du degré moyen d'éthoxylation n et du degré moyen de propoxylation m se situe entre 0,5 et 5, et/ou
b) de 5 à 100 % en poids d'un ou de plusieurs tensioactifs non ioniques de formule générale (II),
R²-(OC₂H₄)r-(OC₃H₆)ₛ-OH (II)
dans laquelle R² est un radical alkyle ou alcényle linéaire ou ramifié ayant 11 ou 13 atomes de C et dans laquelle la somme du degré moyen d'éthoxylation r et du degré moyen de propoxylation s se situe entre 0,5 et 5, et
c) le cas échéant, de l'eau et/ou d'autres additifs et agents, la somme de tous les composants ne dépassant pas 100 % en poids, pour la désinfection dans les domaines du ménage domestique, de l'industrie de préparation et de transformation des produits alimentaires, dans l'industrie cosmétique et pharmaceutique, des hôpitaux, des laveries, des cuisines industrielles, de l'assainissement des bâtiments et de l'agriculture.
